# EUROPÄISCHE PATENTANMELDUNG

(11) **EP 2 230 066 A1**
(43) Veröffentlichungstag der Anmeldung: **22.09.2010**
(21) Anmeldenummer: 09155346.1
(22) Anmeldetag: 17.03.2009
(51) Int. Cl.: B29C 59/00, B60R 21/215

(54) **Vorrichtung zum Herstellen eines Formteils**

(71) Anmelder: GEISS Aktiengesellschaft, 96145 Sesslach (DE)
(72) Erfinder: Geiss, Manfred, 96145, Sesslach (DE)
(74) Vertreter: Peckmann, Ralf

(57) **Zusammenfassung**

Die vorliegende Erfindung schafft eine Vorrichtung (1) zum Herstellen eines Formteils (3), insbesondere einer Haut eines Innenverkleidungsbauteils eines Kraftfahrzeuges, mit einer Form (2), welche der Vorrichtung (1) für unterschiedliche Herstellungsschritte zugeordnet ist, einer Aufbringeinrichtung zum Aufbringen eines Formteilmaterials in die Form (2) zum Bilden des Formteils (3); und einer Bearbeitungseinrichtung (6) zum Einbringen einer vorbestimmten Schwächungslinie in das gebildete und sich nach wie vor in der Form (2) befindliche Formteil (3).

## Beschreibung

Die vorliegende Erfindung bezieht sich auf eine Vorrichtung zum Herstellen eines Formteils, insbesondere einer Haut eines Innenverkleidungsbauteils eines Kraftfahrzeuges.

Obwohl auf beliebige Formteile anwendbar, werden die vorliegende Erfindung sowie die ihr zugrunde liegende Problematik in Bezug auf Formteile im Kraftfahrzeugbereich und insbesondere auf Formteile näher erläutert, welche eine Schwächungslinie in der Haut eines Innenverkleidungsbauteils eines Kraftfahrzeuges aufweisen.

Bei Kraftfahrzeugen ist inzwischen der Schutz von Insassen bei einem Aufprall durch sogenannte Airbag-Systeme Standard. Dabei ist es üblich, dass beispielsweise vor dem Beifahrer in das Armaturenbrett bzw. die Instrumententafel eine Aussparung eingebracht wird, in welche die Einrichtung für den Airbag eingebracht ist. Gleichermaßen ist es mittlerweile auch gängig, derartige Airbag-Systeme in die A-, B- und/oder C-Säulen des Kraftfahrzeuges als Kopfairbag-Systeme zu integrieren. Aus optischen Gründen ist es dabei üblich, diese Airbag-Einrichtungen unsichtbar anzubringen. Für den Beifahrer-Airbag beispielsweise wird hierzu im Bereich der die Airbag-Einrichtung tragenden Instrumententafel von der Rückseite her eine Materialschwächung vorgenommen, welche ausreicht, dass bei einem Unfall ein Aufreißen der Sichtfläche entlang der Materialschwächung und folglich ein Freigeben des Airbags gewährleistet wird.

Bisher wird bei der Herstellung einer Haut eines Innenverkleidungsbauteils mit integrierter Schwächungslinie als Airbag-Sollbruchstelle gemäß einem der Anmelderin intern bekannten Stand der Technik wie folgt vorgegangen. Zunächst wird mittels eines Sprühverfahrens ein entsprechendes Sprühmaterial in eine zugeordnete Negativform gesprüht und ausgehärtet. Hierdurch entsteht ein an die geometrische Form der Negativform angepasstes Formteil. Dieses Formteil wird anschließend der Negativform entnommen, aus der Sprühvorrichtung herausgeführt und in eine örtlich getrennte und autarke Bearbeitungsmaschine zum Einbringen der Schwächungslinie überführt und in einer entsprechenden Aufnahme der Bearbeitungsmaschine fest eingebracht. Dies ist erforderlich, da die Bearbeitungsmaschine zum Einbringen der Schwächungslinie bewegliche Bauteile aufweist, welche im Falle eines Kontaktes mit dem Sprühmaterial während des Sprühvorgangs beschädigt und in ihrer Funktionsweise gestört werden könnten. Das Sprühmaterial ist im Allgemeinen ein thermoplastisches, klebriges Sprühmaterial, welches sich in unerwünschter Weise an den einzelnen Bauteilen anhaften würde und schwerlich zu entfernen wäre.

Nachfolgend wird bei diesem Ansatz mittels der Bearbeitungsmaschine eine vorbestimmte Schwächungslinie in das überführte und fest eingesetzte Formteil zum Herstellen eines eine Schwächungslinie aufweisenden Formteils eingebracht.

An diesem Ansatz hat sich jedoch die Tatsache als nachteilig herausgestellt, dass das Entnehmen des Formteils aus der Sprüheinrichtung und Überführen in die Bearbeitungseinrichtung mit einem erheblichen Arbeits- und Zeitaufwand verbunden ist, da bei einem Einsetzen des Formteils in die Bearbeitungsmaschine eine vollflächige Anlage des Formteils in der entsprechenden Aufnahme der Bearbeitungsmaschine gewährleistet sein muss und entsprechende Lage- und Schrumpfungstoleranzen überwacht und mitberücksichtigt werden müssen. Des Weiteren müssen spezielle Einrichtungen zum Entnehmen des Formteils aus der Sprüheinrichtung und zum Überführen des Formteils in die Bearbeitungsmaschine vorgesehen, gesteuert und entsprechend überwacht werden.

Der vorliegenden Erfindung liegt somit die Aufgabe zugrunde, eine Vorrichtung zum Herstellen eines eine Schwächungslinie aufweisenden Formteils zu schaffen, welche die vorgenannten Nachteile auf einfache und kostengünstige Weise beseitigt, ohne dass die Eigenschaften des hergestellten Formteils negativ beeinflusst werden.

Diese Aufgabe wird erfindungsgemäß durch die Vorrichtung mit den Merkmalen des Patentanspruchs 1 gelöst.

Die der vorliegenden Erfindung zugrundeliegende Idee besteht darin, dass die Vorrichtung eine der Vorrichtung für unterschiedliche Herstellungsschritte zugeordnete Form, eine Aufbringeinrichtung zum Aufbringen eines Formteilmaterials in die Form der Vorrichtung zum Bilden des Formteils und gleichzeitig eine Bearbeitungseinrichtung zum Einbringen der vorbestimmten Schwächungslinie in das geformte und sich nach wie vor in der selben Form befindliche Formteil aufweist.

Somit weist die vorliegende Erfindung gegenüber dem oben erläuterten Ansatz gemäß dem der Anmelderin bekannten Stand der Technik den Vorteil auf, dass das Formteil in ein und der selben Form gesprüht und ausgehärtet sowie mit der vorbestimmten Schwächungslinie ausgebildet werden kann, ohne dass das Formteil aus dieser Form entnommen und in eine weitere Aufnahme der Bearbeitungsmaschine bzw. -station überführt und eingesetzt werden muss. Des Weiteren sind die mit dem Entnehmen und Wiedereinsetzen des Formteils anfallenden Problematiken beseitigt, während gemäß der vorliegenden Erfindung aufgrund der Verwendung lediglich eines Formteils bzw. einer Formteilaufnahme eine Kontrolle einer vollflächigen Anlage des gesprühten Formteils in einer weiteren Aufnahme sowie eine Überwachung von Lage- und Schwächungstoleranzen vorteilhaft entfallen, und höhere Genauigkeiten bei der Einbringung von Schwächungslinien erreicht werden können.

In den Unteransprüchen finden sich vorteilhafte Ausgestaltungen und Verbesserungen der im Anspruch 1 angegebenen Vorrichtung.

Gemäß einer bevorzugten Weiterbildung umfasst die Vorrichtung ferner mindestens eine Schutzeinrichtung zum Schützen eines vorbestimmten Elementes der Bearbeitungseinrichtung und/oder eines Benutzers der Vorrichtung vor einem schädlichen Kontakt mit dem Formteilmaterial.

Gemäß einer weiteren bevorzugten Weiterbildung ist das Formteilmaterial als mittels Aufsprühen in die Form aufbringbares Sprühmaterial, insbesondere als thermoplastisches Sprühmaterial und/oder als beispielsweise ein Treibmittel enthaltendes Schaummaterial, ausgebildet. Diese Formteilmaterialien erfordern ein Vorsehen der erfindungsgemäßen Schutzeinrichtung, da sich das Sprühmaterial aufgrund seiner klebrigen Eigenschaften an etwaigen beweglichen Bauteilen der Bearbeitungseinrichtung in unerwünschter Weise anhaftet und aus dem Treibmittel entweichende Bestandteile, wie insbesondere Wasser, eine unerwünschte Korrosion bestimmter Bauteile der Bearbeitungseinrichtung hervorrufen können.

Gemäß einer weiteren bevorzugten Weiterbildung weist die mindestens eine Schutzeinrichtung eine mit Überdruck beaufschlagbare Abdeckeinrichtung zum Abdecken eines beweglichen Bauteils der Bearbeitungseinrichtung, insbesondere einer Kugelrollspindel, einer Linearführung und/oder eines Kugelrolllagers, auf, beispielsweise in Form einer Faltenbalgabdeckung oder einer Teleskopabdeckung. Somit ist ein Schutz der gefährdeten Bauteile der Bearbeitungseinrichtung vor dem entsprechenden Formteilmaterial auf einfache und kostengünstige Weise gewährleistet derart, dass das Herstellen des Formteils an sich sowie das Einbringen der Schwächungslinie das Formteil vorteilhaft örtlich an der selben Position in der selben Aufnahme der Vorrichtung vorgenommen werden können.

Gemäß einem weiteren bevorzugten Ausführungsbeispiel der vorliegenden Erfindung weist die mindestens eine Schutzeinrichtung eine Einhausung, beispielsweise in Form einer Schutzkabine oder eines entsprechend abgeschirmten Formteilmaterial-Aufbringbereiches, auf. Hierdurch kann der Prozess des Aufsprühens des Sprühmaterials bzw. des Formteilmaterials innerhalb des eingehausten Aufbringbereiches derart vorgenommen werden, dass die sich außerhalb des eingehausten Aufbringbereiches befindlichen Bauteile der Bearbeitungseinrichtung sowie ein etwaiger Benutzer der Vorrichtung vor einem Kontakt mit dem verwendeten Sprühmaterial in geeigneter Weise geschützt werden.

Beispielsweise kann die Aufbringeinrichtung auch örtlich getrennt von der Bearbeitungseinrichtung vorgesehen sein, wobei in diesem Fall die Schutzeinrichtung eine entsprechende Transporteinrichtung zum Verfahren der Form aus der Aufbringeinrichtung heraus und in die Bearbeitungseinrichtung hinein aufweist, insbesondere eine die Form tragende Schiebe-, Shuttle- oder Drehtischeinrichtung. Hierdurch wird in vorteilhafter Weise gewährleistet, dass das Formteil in ein und der selben Form sowohl während des Sprühvorgangs als auch während des Vorgangs des Einbringens der Schwächungslinie verbleiben kann und dass dennoch die beweglichen Bauteile der Bearbeitungseinrichtung vor dem Formteilmaterial geschützt werden.

Gemäß einer weiteren bevorzugten Ausführungsform weist die Schutzeinrichtung zusätzlich weitere Schutzmittel auf, beispielsweise geeignete Schleuseneinrichtungen, Absaug- oder Reinigungsmittel, resistente Beschichtungsmaterialien der zu schützenden Bauteile oder dergleichen. Für einen Fachmann ist es offensichtlich, dass alle beschriebenen Schutzmaßnahmen beliebig miteinander kombiniert werden können und eine Auswahl der jeweiligen Schutzeinrichtung bzw. Schutzeinrichtungen in Abhängigkeit des jeweiligen Anwendungsfalls, insbesondere in Abhängigkeit des verwendeten Sprühmaterials, getroffen werden kann.

Die Bearbeitungseinrichtung ist beispielsweise als Bestandteil einer CNC-Bearbeitungsmaschine, insbesondere einer 3- bis 6- achsige CNC-Bearbeitungsmaschine, ausgebildet. Hierdurch wird das genaue und mit einer geringen Toleranz behaftete Einbringen der vorbestimmten Schwächungslinie in das Formteil gewährleistet. Insbesondere weist die Bearbeitungseinrichtung eine CNC-gesteuerte Schneidklinge oder einen CNC-gesteuerten Fräskopf zum Einbringen der vorbestimmten Schwächungslinie auf. Dies ist in Abhängigkeit des jeweiligen Anwendungsfalls und der Art und geometrischen Form der jeweiligen Schwächungslinie auszuwählen.

Gemäß einem weiteren bevorzugten Ausführungsbeispiel ist das Formteil als Haut einer Instrumententafel, eines Handschuhfachs, einer Verkleidung einer A-, B- oder C-Säule eines Kraftfahrzeuges oder dergleichen ausgebildet. Es ist allerdings für einen Fachmann offensichtlich, dass die vorliegende Vorrichtung auch zum Herstellen eines anderen nicht explizit angegebenen Formteils geeignet ist.

Nach einer weiteren bevorzugten Ausgestaltung bringt die Bearbeitungseinrichtung eine Schwächungslinie in einem vorbestimmten Abstand zu der Außenfläche des Formteils ein, wobei die Schwächungslinie als Sollbruchstelle für einen von dem Formteil aufgenommenen Airbag dient. Des Weiteren weist die Form der Vorrichtung eine vorbestimmte Oberflächenbeschaffenheit auf, um ein entsprechendes Formteil mit dieser vorbestimmten Oberflächenbeschaffenheit zu bilden. Folglich kann auf einfache und kostengünstige Weise das jeweils gewünschte Formteil durch Auswahl der entsprechend zugehörigen Form mit vorbestimmten charakteristischen Eigenschaften hergestellt werden.

Die Erfindung wird im Folgenden anhand von Ausführungsbeispielen unter Bezugnahme auf die beiliegenden Figuren der Zeichnung näher erläutert.

### Von den Figuren zeigen:

- Fig. 1: eine schematische Querschnittsansicht eines Ausschnitts einer erfindungsgemäßen Vorrichtung gemäß einem bevorzugten Ausführungsbeispiel der vorliegenden Erfindung; und
- Fig. 2: eine vergrößerte Ansicht des Ausschnitts A aus Fig. 1.

In den Figuren der Zeichnung bezeichnen gleiche Bezugszeichen dieselben oder funktionsgleiche Komponenten, soweit nichts Gegenteiliges angegeben ist.

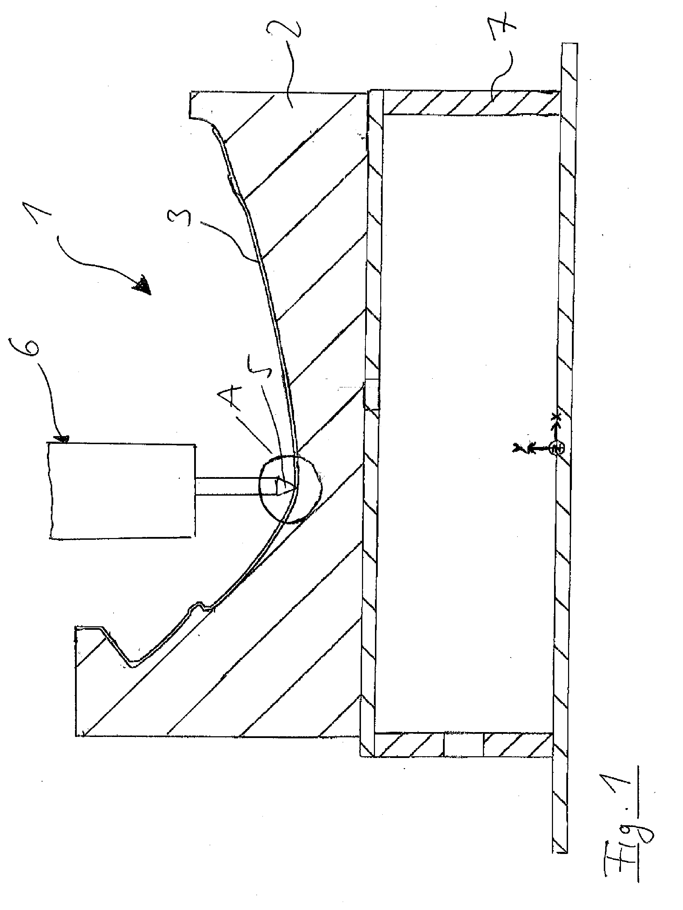

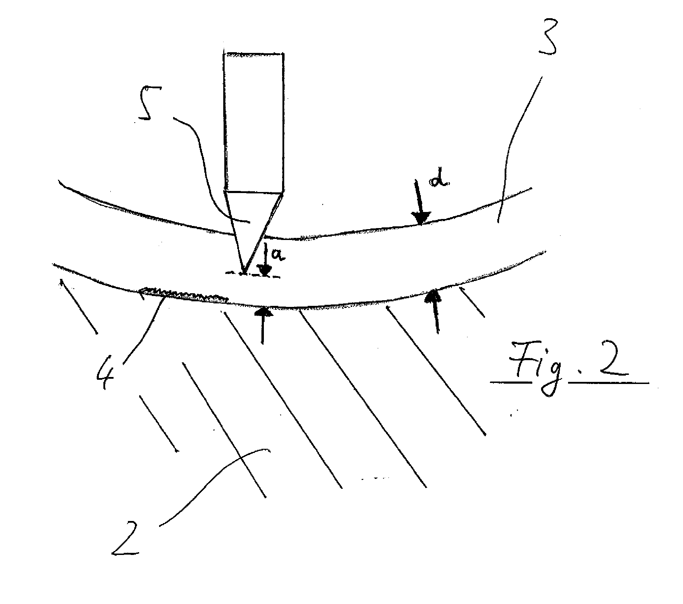

Im Folgenden werden bevorzugte Ausführungsbeispiele der vorliegenden Erfindung unter Bezugnahme auf die Figuren 1 und 2 näher erläutert. Gemäß einer bevorzugten Ausgestaltung weist die Vorrichtung 1 eine CNC-Werkzeug bzw. -Steuermaschine mit lediglich einem gemeinsamen Sprüh- und Bearbeitungsraum bzw. bereich auf, in welchem zunächst beispielsweise ein thermoplastisches Sprühmaterial in eine in geeigneter Weise in dem gemeinsamen Sprüh- und Bearbeitungsbereich aufgenommene Form 2 gesprüht wird. Dadurch wird das Formteil 3 mit der entsprechenden geometrischen Form und Oberflächenbeschaffenheit 4 der Form 2 hergestellt.

Wie in Fig. 1 illustriert ist, ist die Form 2 vorzugsweise fest auf einem Bearbeitungstisch 7 der verwendeten CNC-Steuermaschine befestigt. Dadurch wird eine vorbestimmte räumliche Lage der Form 2 und folglich des Formteils 3 während des gesamten Herstellungsprozesses in vorteilhafter Weise gewährleistet.

In diesem gemeinsamen Sprüh- und Bearbeitungsraum wird nach der Herstellung des gesprühten Formteils 3 der Sprühkopf der Sprüheinrichtung aus dem eigentlichen Sprühbereich herausverfahren und das Bearbeitungswerkzeug 5 der Bearbeitungseinrichtung 6 in den eigentlichen Bearbeitungsbereich hineinverfahren. Das Bearbeitungswerkzeug kann beispielsweise als Schneidklinge oder Fräswerkzeug ausgestaltet sein, in Abhängigkeit des jeweiligen Anwendungsfalls.

Aufgrund der örtlichen Übereinstimmung des eigentlichen Sprühbereiches mit dem Bearbeitungsbereich und der selben Aufnahmeform 2 sind gemäß dem vorliegenden Ausführungsbeispiel die sich in der gemeinsamen Sprüh- und Bearbeitungskammer befindlichen Bauteile der Vorrichtung und insbesondere der Bearbeitungseinrichtung 6 vor einem schädigenden Kontakt mit dem verwendeten Formmaterial zu schützen. Gemäß dem vorliegenden Ausführungsbeispiel werden insbesondere die Kugelrollspindeln, die Linearführungen und die Kugelrolllager der Bearbeitungseinrichtung 6 vor einem Kontakt mit dem Formmaterial dadurch geschützt, dass diese Bauteile entweder mittels einer Faltenbalgabdeckung oder einer Teleskopabdeckung entsprechend abgedichtet werden. Die vorgesehenen Abdeckungen können des Weiteren vorzugsweise derart mit einem Überdruck beaufschlagt werden, dass durch etwaige Leckagen der jeweiligen Abdeckungen keine Fremdpartikel zu den mit einem Überdruck beaufschlagten Bauteilen zum Schutze dergleichen hindurch treten können. Es ist für einen Fachmann offensichtlich, dass auch anderweitige Abdeckmaßnahmen durch die vorliegende Erfindung als mitumfasst gelten.

Die Vorrichtung 1 weist vorzugsweise ferner einen in abdichtender Weise verschließbaren Öffnungsbereich auf, über welchen das mit einer Schwächungslinie versehene Formteil 3 der gemeinsamen Form 2 letztendlich entnehmbar ist. Ein derartiger abdichtender Verschluss schützt einen etwaigen Benutzer der Vorrichtung 1 vor einem eventuell schädlichen Kontakt mit dem verwendeten Sprühmaterial.

Es sei an dieser Stelle darauf hingewiesen, dass in der vorliegenden Anmeldung unter Sprühmaterial zum einen das verwendete thermoplastische Material, zum anderen aber auch Schaummaterialien zu verstehen sind, welche zum Herstellen eines Formteils 3 mit einer gewünschten Schaumschichtdicke verwendet werden. Diese Schaummaterialien weisen im Allgemeinen ein Treibmittel auf, wobei als Treibmittel oftmals ein bestimmter Wasseranteil in dem Schaummaterial verwendet wird. Da bei dem auftretenden Schäumungsvorgang folglich Wasser entweicht, sollen die gemäß der vorliegenden Erfindung vorgesehenen Schutzeinrichtungen auch einem Schutz der entsprechenden Bauteile der Bearbeitungseinrichtung vor einem Kontakt mit dem entweichenden Treibmittel, also dem entweichenden Wasser, zum Verhindern einer etwaigen Korrosion dienen, zusätzlich zu dem bereits angesprochenen Schutz der Bauteile vor einem schädlichen Kontakt mit dem im Allgemeinen klebrigen thermoplastischen Formteilmaterial.

Die Sprüheinrichtung und/oder die Bearbeitungseinrichtung 6 sind beispielsweise Bestandteil einer CNC-Steuermaschine, insbesondere einer 3-6-achsigen CNC-Steuermaschine. Insbesondere durch das Einbinden des Bearbeitungswerkzeugs 5 in diese CNC-Steuermaschine bzw. Bearbeitungsmaschine wird das exakte Einbringen einer vorbestimmten Schwächungslinie gewährleistet.

Das Formteil 3 wird beispielsweise für eine Instrumententafel mit einer Wanddicke d von 1 mm mittels eines Sprühverfahrens hergestellt. Es ist für einen Fachmann offensichtlich, dass auch Formteile mit sich davon unterscheidenden Wanddicken oder mit nicht konstanten Wanddicken von dem vorliegenden Erfindungsgedanken mitumfasst sind. Im Hinblick auf Sicherheitsaspekte sind derartige Schwächungslinien bei den Instrumententafeln mit einer äußerst geringen Toleranz einzubringen, damit eine sogenannte Restwanddicke a, wie in Fig. 2 dargestellt, erhalten bleibt. Die Restwanddicke a wird derart toleriert, dass einerseits ein sicheres Ausreißen im Falle eines Unfalls zum Freigeben eines etwaig aufgenommenen Airbags stattfindet und andererseits diese Schwächung über die Lebensdauer des Fahrzeuges nicht zu einer sichtbaren Linie oder gar zu einem unbeabsichtigten Ausreißen führen kann. Demgemäß betragen übliche Restwanddicken a etwa 0,5 mm und übliche Toleranzen für diese Restwanddicken a liegen in der Größenordnung +/- 0,03 mm. Demgemäß kommt es für das hochpräzise Einbringen von Schwächungslinien insbesondere in einer Instrumententafel eines Kraftfahrzeuges darauf an, dass eine exakte Kontrolle der Länge und Form des Bearbeitungswerkzeuges vorgenommen wird, dass die Toleranz der beteiligten Maschinenachsen und - baugruppen in Bezug auf das Werkzeug eingehalten wird und dass die Lage der das Bauteil oder Formteil tragenden Aufnahme bzw. Form 2 berücksichtigt wird.

Da sich gemäß dem vorliegenden Ausführungsbeispiel die Lage der Aufnahme bzw. der Form 2 aufgrund der konstanten örtlichen Lage in der Vorrichtung 1 nicht ändert, können die Schwächungslinien mit optimierter Toleranz eingebracht werden.

Mit Hilfe einer leistungsfähigen CNC-Steuerung kann die tatsächliche Raumlage der Form 2 und somit des Formteils 3 erfasst werden, und ein Schneidprogramm für das Einbringen der Schwächungslinien kann entsprechend dieser Raumlage orientiert und exakt abgefahren werden. Dabei wird bevorzugt eine CNC-Steuerung verwendet, die eine räumliche Drehung eines beliebigen Bearbeitungsprogramms ermöglicht.

Aufgrund dieser Integration der Form 2 in eine CNC-Steuermaschine unter Verwendung der beschriebenen Schutzeinrichtungen kann eine örtlich mit der Bearbeitungseinrichtung übereinstimmende Sprüheinrichtung innerhalb der CNC-Werkzeug bzw. Steuermaschine vorteilhaft vorgesehen werden, so dass das Formteil während des gesamten Herstellungsprozesses in der selben Form 2 und in konstanter Raumlage verbleiben kann.

Gemäß einem weiteren bevorzugten Ausführungsbeispiel der vorliegenden Erfindung kann ein Schutz der insbesondere beweglichen Bauteile der Bearbeitungseinrichtung auch dadurch gewährleistet werden, dass die Form 2 auf einer beweglichen Transporteinrichtung, insbesondere einem Shuttletisch, einem Schiebetisch oder einem Rundtisch, fest montiert wird. Beispielsweise ist der verfahrbare Tisch mitsamt darauf montierter Form 2 von einem örtlich von dem Bearbeitungsbereich getrennt vorgesehenen Sprühbereich in den Bearbeitungsbereich hinein verfahrbar und vice versa. Die Vorrichtung 1 kann eine eigene Sprühkabine oder einen anderweitig eingehausten Sprühbereich für den örtlich von dem Bearbeitungsbereich getrennten Sprühvorgang aufweisen.

In Fig. 1 kann der Bearbeitungstisch 7 gemäß dem vorliegenden Ausführungsbeispiel beispielsweise als Shuttle- oder Schiebetisch ausgebildet sein, welcher beispielsweise entlang der in Fig. 1 dargestellten X-Achse aus dem in Fig. 1 nicht dargestellten Sprühbereich in den Bearbeitungsbereich verfahrbar ist.

Aufgrund des Sprühvorgangs zum Herstellen des Formteils 3 in der Form 2 in dem abgeschirmten Sprühbereich können bei geeigneter Abschirmung sowohl der Benutzer als auch die entsprechenden zu schützenden Bauteile der Bearbeitungseinrichtung bzw. der CNC-Steuermaschine vor einem Kontakt mit dem Sprühmaterial aufgrund der örtlichen Trennung des Sprühbereiches von dem Bearbeitungsbereich entsprechend geschützt werden.

Nach erfolgtem Sprühprozess und Herstellung des Formteils 3 wird der verfahrbare Bearbeitungstisch 7 von dem Sprühbereich in den Bearbeitungsbereich hinein verfahren, wobei in dem Bearbeitungsbereich das Einbringen vorbestimmter Schwächungslinien in das Formteil 3 mittels der Bearbeitungseinrichtung 6 und dem Bearbeitungswerkzeug 5 der CNC-Steuermaschine vorgenommen wird. Selbstverständlich können auch für den Bearbeitungsvorgang entsprechende Abschirmungen und Schutzmaßnahmen vorgesehen werden, wie insbesondere spezielle Schleusen oder Abdeckungen der zu schützenden Bauteile. Befindet sich beispielsweise der Bearbeitungstisch 7 in Bearbeitungsposition in der CNC-Steuermaschine, wird die Bearbeitungskabine beispielsweise durch vertikal laufende Rollläden oder dergleichen verschlossen.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Insbesondere können neben den oben beschriebenen Schutzeinrichtungen weitere Schutzmaßnahmen getroffen werden, beispielsweise mittels geeigneter Schleuseneinrichtungen, Absaugmittel, resistenter Beschichtungen der zu schützenden Bauteile usw..

Beispielsweise können auch zwei oder mehrere Formen 2 in der Vorrichtung 1 vorgesehen werden, um einen erhöhten Produktionsdurchsatz zu erreichen.

Entscheidend bei der vorliegenden Erfindung ist lediglich, dass die Form 2 sowohl bei dem Sprühvorgang zum Herstellen des Formteils 3 als auch beim Bearbeitungsvorgang zum Einbringen der Schwächungslinie als Aufnahme des Formteils 3 dient und somit eine Entnahme des Formteils 3 und ein Einsetzen des selben in eine weitere Aufnahme zum Einbringen der Schwächungslinien nicht weiter erforderlich ist. Dies wird durch die oben beschriebenen Schutzmaßnahmen entsprechend gewährleistet, da bestimmte Bauteile der Bearbeitungseinrichtung bzw. der CNC-Steuermaschine in geeigneter Weise vor einem Kontakt mit dem Sprühmaterial geschützt werden. Das Gleiche gilt analog für einen etwaigen Benutzer der gesamten Vorrichtung.

### Bezugszeichenliste

- 1: Vorrichtung
- 2: Form
- 3: Formteil
- 4: Oberflächenbeschaffenheit
- 5: Bearbeitungswerkzeug
- 6: Bearbeitungseinrichtung
- 7: Bearbeitungstisch
- a: Restwanddicke
- d: Wanddicke

## Patentansprüche

1. Vorrichtung (1) zum Herstellen eines Formteils (3), insbesondere einer Haut eines Innenverkleidungsbauteils eines Kraftfahrzeuges, mit:
einer Form (2), welche der Vorrichtung (1) für unterschiedliche Herstellungsschritte zugeordnet ist;
einer Aufbringeinrichtung zum Aufbringen eines Formteilmaterials in die Form (2) zum Bilden des Formteils (3); und
einer Bearbeitungseinrichtung (6) zum Einbringen einer vorbestimmten Schwächungslinie in das gebildete und sich nach wie vor in der Form (2) befindliche Formteil (3).

2. Vorrichtung nach Anspruch 1, **dadurch gekennzeichnet, dass**
das Formteilmaterial als mittels Aufsprühen in die Form (2) aufbringbares Sprühmaterial, insbesondere als thermoplastisches Sprühmaterial und/oder als Schaummaterial, beispielsweise ein Treibmittel enthaltend, ausgebildet ist.

3. Vorrichtung nach Anspruch 1 oder 2, **dadurch gekennzeichnet, dass** mindestens eine Schutzeinrichtung zum Schützen eines vorbestimmten Elementes der Bearbeitungseinrichtung (6) und/oder eines Benutzers der Vorrichtung (1) vor einem schädlichen Kontakt mit dem Formteilmaterial vorgesehen ist.

4. Vorrichtung nach Anspruch 3, **dadurch gekennzeichnet, dass** die mindestens eine Schutzeinrichtung eine mit Druck beaufschlagbare Abdeckeinrichtung zum Abdecken eines beweglichen Bauteils der Bearbeitungseinrichtung (6), insbesondere einer Kugelrollspindel, einer Linearführung und/oder eines Kugelrolllagers, aufweist, beispielsweise in Form einer Faltenbalgabdeckung oder einer Teleskopabdeckung.

5. Vorrichtung nach Anspruch 3 oder 4, **dadurch gekennzeichnet, dass** die mindestens eine Schutzeinrichtung eine Einhausung, beispielsweise in Form einer Schutzkabine oder eines entsprechend abgeschirmten Formteilmaterial-Aufbringbereiches, aufweist.

6. Vorrichtung nach wenigstens einem der vorhergehenden Ansprüche, **dadurch gekennzeichnet, dass** die Aufbringeinrichtung örtlich getrennt von der Bearbeitungseinrichtung (6) vorgesehen ist.

7. Vorrichtung nach wenigstens einem der Ansprüche 3 bis 6, **dadurch gekennzeichnet, dass** die mindestens eine Schutzeinrichtung eine die Form (2) aus der Aufbringeinrichtung heraus und in die Bearbeitungseinrichtung (6) hinein verfahrbare Transporteinrichtung (7), beispielsweise eine die Form (2) tragende Shuttle-, Schiebe- oder Drehtischeinrichtung, aufweist.

8. Vorrichtung nach wenigstens einem der Ansprüche 3 bis 7, **dadurch gekennzeichnet, dass** die mindestens eine Schutzeinrichtung zusätzlich weitere Schutzmittel aufweist, beispielsweise eine geeignete Schleuseneinrichtung, ein Absaugmittel, resistente Beschichtungsmaterialien zum Beschichten der zu schützenden Bauteile oder dergleichen.

9. Vorrichtung nach wenigstens einem der vorhergehenden Ansprüche, **dadurch gekennzeichnet, dass** die Bearbeitungseinrichtung (6) als Bestandteil einer CNC-Bearbeitungsmaschine, insbesondere einer 3- bis 6-achsige CNC-Bearbeitungsmaschine, ausgebildet ist.

10. Vorrichtung nach wenigstens einem der vorhergehenden Ansprüche, **dadurch gekennzeichnet, dass** die Bearbeitungseinrichtung (6) eine CNC-gesteuerte Schneidklinge (5) oder einen CNC-gesteuerten Fräskopf zum Einbringen der vorbestimmten Schwächungslinie aufweist.

11. Vorrichtung nach wenigstens einem der vorhergehenden Ansprüche, **dadurch gekennzeichnet, dass** das Formteil (3) als Haut einer Instrumententafel, eines Handschuhfachs, einer Verkleidung einer A-, B- oder C-Säule eines Kraftfahrzeuges oder dergleichen ausgebildet ist.

12. Vorrichtung nach wenigstens einem der vorhergehenden Ansprüche, **dadurch gekennzeichnet, dass** die Bearbeitungseinrichtung (6) derart ausgebildet ist, dass sie eine Schwächungslinie in einem vorbestimmten Abstand zu der Außenfläche des Formteils (3) einbringt, wobei die Schwächungslinie als Sollbruchstelle für einen von dem Formteil (3) aufgenommenen Airbag dient.

13. Vorrichtung nach wenigstens einem der vorhergehenden Ansprüche, **dadurch gekennzeichnet, dass** die Form (2) eine vorbestimmte geometrische Form und/oder eine vorbestimmte Oberflächenbeschaffenheit (4) zum Bilden eines Formteils (3) mit entsprechender geometrischer Form bzw. Oberflächenbeschaffenheit (4) aufweist.
